# FASCICULE DE BREVET EUROPEEN

(11) **EP 1 455 981 B1**
(45) Date de publication et mention de la délivrance du brevet: **28.09.2005**
(21) Numéro de dépôt: 02805416.1
(22) Date de dépôt: 20.12.2002
(51) Int. Cl.: B23H 7/08

(54) **FIL POUR ELECTROEROSION A GRANDE VITESSE D USINAGE**
DRAHT FÜR HOCHGESCHWINDIGKEITSFUNKENEROSION
WIRE FOR HIGH-SPEED ELECTRICAL DISCHARGE MACHINING

(30) Priorité: 21.12.2001 FR 0117052; 27.05.2002 FR 0206575
(43) Date de publication de la demande: 15.09.2004
(73) Titulaire: THERMOCOMPACT, 74370 Metz Tessy (FR)
(72) Inventeur: LY, Michel, F-74000 Annecy (FR)
(74) Mandataire: Poncet, Jean-François
(86) Numéro de dépôt international: PCT/FR2002/004515
(87) Numéro de publication internationale: WO 2003/053621

(56) Documents cités:
- EP-A- 0 526 361
- EP-A- 1 080 815
- US-A- 4 977 303

## Description

### DOMAINE TECHNIQUE DE L'INVENTION

La présente invention concerne les fils électrodes utilisés pour l'usinage par étincelage érosif, permettant la découpe ou la finition de pièces conductrices de l'électricité.

L'étincelage érosif permet d'usiner une pièce conductrice de l'électricité, en générant des étincelles entre la pièce à usiner et un fil conducteur de l'électricité. Le fil conducteur de l'électricité défile au voisinage de la pièce dans le sens de la longueur du fil, et il est déplacé progressivement dans le sens transversal par rapport à la pièce soit par translation du fil soit par translation de la pièce.

Les étincelles érodent progressivement la pièce et le fil. Le défilement longitudinal du fil permet de conserver en permanence un diamètre de fil suffisant pour éviter sa rupture dans la zone d'étincelage. Le déplacement relatif du fil et de la pièce dans le sens transversal permet de découper la pièce ou de traiter sa surface, le cas échéant.

Les machines pour électroérosion à fil comportent des -moyens pour maintenir et tendre un tronçon-de fil au voisinage de la pièce à usiner dans une zone d'étincelage emplie d'un diélectrique tel que l'eau, des moyens pour faire défiler le fil longitudinalement dans la zone d'étincelage, des moyens pour générer un courant d'étincelage entre le fil et la pièce à usiner, et des moyens pour produire un déplacement relatif du fil et de la pièce transversalement par rapport à la direction longitudinale du fil.

Il existe actuellement de nombreux types de fil pour électroérosion, qui se classent en deux familles principales.

Dans la première famille, les fils ont une structure transversale généralement homogène, constituée par exemple de cuivre, de laiton, de tungstène, ou de molybdène. L'alliage choisi doit satisfaire aux exigences de conductivité électrique, de résistance mécanique. La conductivité est nécessaire pour l'amenée de l'énergie dans la zone d'étincelage. La résistance mécanique est nécessaire pour éviter la rupture du fil dans la zone d'étincelage. Si possible, l'alliage est choisi pour que le fil ait un comportement favorable à l'érosion, c'est-à-dire pour que le fil permette de réaliser une érosion rapide. La vitesse d'érosion maximale d'un fil est la limite de vitesse au-delà de laquelle le fil casse lorsqu'on augmente l'énergie d'étincelage pour accélérer l'érosion.

En général, chaque structure de fil confère une vitesse d'usinage, une précision d'usinage et un état de surface.

On a ainsi proposé des fils de laiton contenant 35 à 37 % de zinc, qui constituent un compromis économiquement acceptable, mais obtenu au prix d'une vitesse d'érosion relativement faible.

La seconde famille de fils pour électroérosion comprend les fils revêtus, c'est-à-dire constitués d'une âme métallique revêtue d'une couche superficielle généralement homogène en métal ou alliage. Lors de l'usinage par étincelage érosif par fil, l'arc électrique formé entre la surface du fil et la surface de la pièce, au travers du diélectrique tel que l'eau, n'atteint pas le centre du fil, sous peine de rupture de ce dernier. L'usure du fil se fait par son revêtement.

L'intérêt des fils revêtus est que l'on peut choisir l'âme du fil en fonction de ses propriétés électriques et mécaniques, et choisir le revêtement en fonction de ses propriétés érosives et de sa résistance de contact.

Ainsi, dans le document FR 2 418 699, on a proposé de revêtir une âme de cuivre ou de laiton par un alliage de zinc, de cadmium, d'étain, de plomb, de bismuth ou d'antimoine. Le document enseigne que la vitesse d'usinage est améliorée par le revêtement. L'exemple est une âme en cuivre revêtue d'un revêtement dont l'épaisseur est d'environ 15 µm pour un diamètre total de 180 µm.

Il s'avère toutefois qu'un tel fil d'électroérosion ne permet pas d'obtenir une vitesse d'usinage optimale, et un besoin existe pour augmenter encore cette vitesse.

Dans l'état de la technique connu à ce jour relatif à des fils d'électroérosion constitués d'une âme à base de cuivre revêtue d'un revêtement en alliage, on a toujours préconisé d'utiliser des cuivres alliés ou microalliés pour augmenter leurs propriétés mécaniques. L'intérêt d'augmenter les propriétés mécaniques de l'âme, et donc les propriétés mécaniques du fil, est très important pour l'obtention de fils droits pouvant être enfilés sur les machines d'électroérosion sans avoir à subir un recuit de redressage, et on a toujours considéré que cela permet en outre de réduire les risques de rupture du fil en cours d'électroérosion.

Les caractéristiques des cuivres alliés ou microalliés sont notamment publiés dans la publication "Les propriétés du cuivre et de ses alliages", par le Centre d'Information du Cuivre, Laitons et Alliages, Paris, 1992. Ces propriétés sont reproduites dans le tableau ci-après :

| Alliage | Limite d'élasticité à 0.2% , pour l'état H14 AFNOR, (MPa), ou après durcissement structural | Conductivité IACS |
|---|---|---|
| Cuivre non allié Cu. Composition selon normes | 320 charge à rupture 350 | 100 |
| Cuivre au cadmium CuCd1 1% de Cadmium | 480 | 86 |
| Cuivre à l'argent CuAg 0.08% d'argent | 320 | 100 |
| Cuivre à l'étain CuSn0.12 0.12% d'étain | Charge à rupture 400 | 88 |
| Cuivre au chrome 0.5 à 1% de chrome Trempé, Revenu, Ecroui | 450 | 80 |
| Cuivre fer2.3 phosphore0.03 2.3% de fer, 0.03% de phosphore Trempé Revenu Ecroui | 415 | 65 |
| Cuivre nickel silicium CuNi2Si 1.6 à 2.5% nickel, 0.5 à 0.8% Silicium Trempé Ecroui Revenu | 680 | 35 |
| Cuivre au béryllium CuBe2 2% de Béryllium Trempé Revenu | 1060 | 22 |
| Cuivre Cobalt Béryllium CuCo2Be 2.5% Cobalt, 0.5% Béryllium Durci en usine, Haute Conductivité | 440 | 60 |
| Laiton CuZn20 20% de zinc | Env. 400 | 32 |
| Laiton CuZn35 35% de zinc | Env. 400 | 28 |

On constate que toute addition d'un métal autre que l'argent, tel que par exemple le cadmium ou l'étain, améliore sensiblement les propriétés mécaniques du cuivre, mais au détriment de la conductivité.

Ainsi, le document EP 0 526 361 A, qui représente l'état de l'art le plus proche, enseigne de prévoir une électrode pour électroérosion comprenant une couche métallique externe contenant du zinc entourant une âme métallique comprenant du cuivre ou un alliage de cuivre. L'un des buts recherchés est l'obtention d'une résistance mécanique élevée du fil. Pour cela, l'homme du métier comprend nécessairement que le cuivre utilisé est un cuivre microallié. Le document préconise d'ailleurs de doper le cuivre par un ou plusieurs éléments tels que le fer, cobalt, titane, phosphore, manganèse, chrome, zirconium, aluminium, étain, nickel. Le document préconise également d'utiliser des alliages, et le seul exemple donné par le document est un fil dont l'âme est en laiton CuZn20.

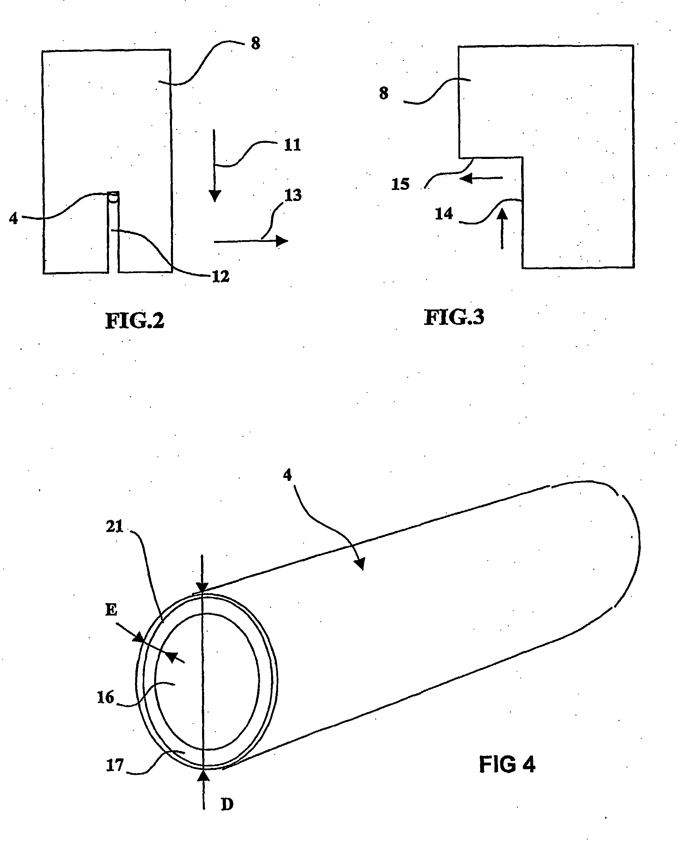

Dans le document US 4,977,303 A, il est enseigné de réaliser un fil d'âme en cuivre recouvert de zinc puis soumis à un traitement thermique de diffusion du zinc dans le cuivre. Dans ce document, l'homme du métier comprend que le cuivre utilisé n'est pas un cuivre pur non allié, puisque la figure 4 représente, à partir d'une profondeur de 11 microns, dans l'âme au delà de la couche de diffusion, une concentration de cuivre clairement inférieure à 100 % alors que la concentration de zinc est nulle.

Le document US 2001/0050269 A déconseille d'utiliser le cuivre seul dans l'âme, à cause de sa trop faible résistance mécanique à haute température.

Aucun de ces documents ne décrit ni ne suggère d'utiliser un cuivre non allié, c'est-à-dire un cuivre à haut degré de pureté.

La présente invention résulte d'une recherche visant à optimiser la structure d'un fil pour électroérosion, afin d'obtenir une grande vitesse d'érosion.

Pour cela, une première observation enseignée par le document EP 0 185 492 A est qu'une augmentation d'épaisseur d'un revêtement d'alliage zinc sur une âme en acier plaqué de cuivre est favorable à la vitesse d'électroérosion, mais pas au-delà d'une épaisseur de 15 µm pour un diamètre total de 200 µm.

Dans le document EP 0 526 361 A précité, on recherche à la fois une grande durée de vie de l'électrode et une bonne qualité de surface de la pièce usinée. Le document enseigne que l'épaisseur de la couche métallique superficielle augmente avec le diamètre du fil. Pour un fil de 1 mm de diamètre, la couche superficielle a une épaisseur de préférence comprise entre 10 et 100 microns. Cela correspond à une épaisseur relative de couche superficielle comprise entre 1 et 10 %. Le seul exemple donné dans le document est un fil dont le diamètre total est de 0,25 mm et qui comprend une couche superficielle métallique de 20 microns d'épaisseur, ce qui correspond à 8 % en épaisseur relative. Il n'y a pas, dans ce document, d'incitation à prévoir une épaisseur relative de couche superficielle supérieure à 10 % du diamètre du fil électrode.

Une seconde observation est que, sur certaines machines d'usinage par électroérosion, la vitesse d'usinage peut parfois être encore augmentée si le métal de la couche superficielle est un laiton obtenu par diffusion thermique du zinc périphérique avec une couche sous-jacente contenant du cuivre.

Le document US 4,977,303 A décrit cette observation, et propose un fil pour électroérosion dans lequel une âme en cuivre allié ou microallié (voir figure 4) est recouverte d'une couche épaisse d'un alliage de cuivre et de zinc obtenu par diffusion thermique puis par tréfilage. La couche d'alliage diffusé de cuivre et de zinc est recouverte d'une couche d'oxyde dont l'épaisseur est d'environ 1 micron. Le document donne l'indication d'une épaisseur absolue de couche superficielle métallique, égale à 22 microns, mais ne donne pas d'indication sur l'épaisseur relative de la couche superficielle par rapport au diamètre du fil.

Dans les fils à couche superficielle en alliage de cuivre et de zinc diffusé en phases α et β, on a toutefois constaté qu'une augmentation de l'épaisseur de la couche superficielle sur une âme en laiton à 37 % de zinc tend à réduire la vitesse d'usinage, ce qui est contraire au but recherché. Ainsi, des essais de découpe d'une pièce d'acier de 50 mm ont été effectués d'une part avec un fil ayant une structure homogène en laiton à 37 % de zinc, d'autre part avec un fil ayant une âme en laiton à 37 % de zinc recouverte d'une couche superficielle d'alliage de zinc et de cuivre diffusé par traitement thermique. Les diamètres des fils et les conditions d'usinage étant identiques, les vitesses d'usinage (en mm²/min) ont été respectivement dans les proportions de 98 pour le fil homogène et 67 pour le fil à couche superficielle, montrant l'effet négatif de la couche superficielle.

On a également constaté qu'une augmentation de la teneur en zinc de la couche superficielle améliore l'efficacité de l'électroérosion. La couche superficielle est alors constituée d'une phase β, ou même d'une phase γ, qui sont plus dures et rigides. Mais on ne sait alors pas augmenter l'épaisseur de la couche superficielle, car le fil devient cassant et difficile à tréfiler, surtout si l'âme est en cuivre non allié.

Par ailleurs, il n'a jusqu'à présent été d'aucune utilité d'augmenter l'épaisseur de la couche superficielle métallique d'alliage au delà de la taille des cratères que les machines d'électroérosion pouvaient réaliser dans la couche superficielle du fil d'électroérosion en cours d'usinage. La taille de ces cratères était d'environ 5 microns, comme indiqué dans le document US 4,977,303. Il n'avait donc pas été possible de remarquer l'intérêt d'augmenter l'épaisseur des couches superficielles au delà d'une épaisseur relative de 10 % du diamètre des fils habituels, et encore moins de remarquer l'intérêt d'une combinaison de couche superficielle épaisse avec une âme en cuivre non allié.

### EXPOSE DE L'INVENTION

Le problème proposé par la présente invention est de concevoir une nouvelle structure de fil électrode pour l'usinage par étincelage érosif permettant d'augmenter sensiblement la vitesse d'usinage par électroérosion, pour un diamètre donné, et dans des conditions d'usinage données.

L'invention a également pour objet de proposer un procédé de fabrication d'un tel fil électrode, et de proposer une méthode d'usinage permettant d'augmenter la vitesse d'usinage.

Pour atteindre ces buts ainsi que d'autres, l'invention part de l'observation surprenante selon laquelle, lorsque l'âme est en cuivre non allié, une augmentation d'épaisseur relative de couche superficielle en laiton diffusé produit une augmentation sensible de la vitesse d'usinage. Ainsi, l'invention prévoit un fil électrode pour usinage par étincelage érosif, comprenant une âme métallique revêtue d'une couche d'enrobage en alliage de zinc diffusé, dans lequel :
- l'âme est en cuivre non allié,
- la couche d'enrobage est en alliage de zinc et de cuivre diffusé,
- l'épaisseur relative de la couche d'enrobage en alliage de cuivre et de zinc est supérieure à 10 % du diamètre du fil électrode.

Une telle structure d'électrode pour électroérosion est particulièrement bien adaptée pour une utilisation avec des machines d'électroérosion dont les générateurs électriques permettent de délivrer une puissance électrique plus élevée, permettant de tirer profit de la présence d'une couche superficielle plus épaisse.

De bons résultats peuvent par exemple être obtenus, pour un diamètre D de fil électrode de 0,20 mm, avec une épaisseur E de la couche d'enrobage supérieure ou égale à 20 microns ; pour un fil électrode de diamètre D 0,25 mm, l'épaisseur E de la couche d'enrobage peut avantageusement être supérieure ou égale à 25 microns ; pour un fil électrode de diamètre D 0,30 mm, l'épaisseur E de la couche d'enrobage peut avantageusement être supérieure ou égale à 30 microns ; pour un fil électrode de diamètre D 0,33 mm, l'épaisseur E de la couche d'enrobage peut avantageusement être supérieure ou égale à 33 microns ; et pour un fil électrode de 0,35 mm de diamètre D, l'épaisseur E de la couche d'enrobage peut avantageusement être supérieure ou égale à 35 microns. Dans tous les cas, on a pu observer une augmentation d'environ 30 % de la vitesse d'élecroérosion, par rapport à un fil de même diamètre en laiton ou en laiton zingué.

Le cuivre constituant l'âme est un cuivre non allié, dont la pureté est définie dans la norme NF A 51 050. Selon l'invention, on préconise l'emploi d'un cuivre choisi parmi la famille suivante des cuivres recommandés, désignés par leurs références selon la norme NF A 51050, en indiquant entre parenthèses les références ISO correspondantes : Cu-a1 (Cu-ETP) ; Cu-a2 (Cu-FRHC) ; Cu-C1 (Cu-OF) ; Cu-c2 (Cu-OFE).

En pratique, on peut choisir le cuivre non allié en fonction de sa conductivité électrique. Le cuivre non allié préconisé présente une conductivité électrique d'environ 100 % IACS, soit 58 Méga Siemens/mètre à 20°C. A 20°C, la conductivité électrique de l'âme de cuivre non allié, écrouie par tréfilage, est de l'ordre de 99 % IACS.

La grande conductivité électrique de l'âme de cuivre non allié écrouie par tréfilage évite l'échauffement excessif du fil électrode lors de l'étincelage, et le protège ainsi de la rupture, contrairement aux cuivres microalliés.

Un second aspect de l'invention est de mettre en évidence l'influence de la conductivité globale du fil électrode sur les performances d'électroérosion, et de mettre à profit cette influence pour augmenter la vitesse d'usinage dans l'hypothèse d'une alimentation en énergie électrique par des générateurs de plus en plus puissants.

La conductivité électrique globale du fil électrode est la somme des conductivités de l'âme et de la couche d'enrobage, multipliées par leurs surfaces respectives dans la section du fil. Le fil électrode selon l'invention présente une conductivité électrique d'au moins 60 % IACS (60 % de la conductivité normalisée du cuivre pur recuit). A défaut de cela, on constate une diminution progressive de la vitesse d'électroérosion.

De façon plus précise, on a pu constater que la conductivité électrique globale du fil électrode peut avantageusement être comprise entre 65 % IACS et 75 % IACS.

En dessous de 65 % IACS, les performances de découpe par étincelage érosif ne sont pas optimales faute d'une conductivité suffisante du fil électrode. Celui-ci casse plus facilement par échauffement dans la zone d'étincelage. Cela est dû à la fois à l'effet Joule, plus intense, et à un moindre refroidissement lié à la plus faible conductivité thermique.

Au dessus de 75 % IACS, on ne peut pas obtenir le type de fil électrode souhaité, car on est obligé de réduire l'épaisseur de la couche diffusée en deçà de 10 % du diamètre du fil électrode. A défaut, le fil est trop rigide et cassant, et ne peut pas être tréfilé pendant sa fabrication.

La conductivité électrique globale recommandée du fil électrode est de l'ordre de 69 % IACS, et correspond à une couche diffusée épaisse d'environ 35 µm pour un fil électrode de 0,33 mm soit environ 11 % d'épaisseur relative. Dans ce cas, le coefficient β de variation de la résistivité globale du fil électrode par rapport à la température est 0,0034 °K⁻¹. Rappelons que la résistivité R(T) d'un fil est affectée par la température selon la loi R(T) / R₀ = 1 + β(T-T₀), R(T) étant la résistivité à la température T considérée, R₀ étant la résistivité du fil à la température de référence T₀.

Les valeurs d'épaisseur relative 11 % et de conductivité électrique globale 69 % IACS donnent de bons résultats dans la plage de diamètres de fil comprise entre 0,20 mm environ et 0,35 mm environ.

Pour obtenir ces valeurs de conductivité, deux paramètres sont disponibles à l'opérateur lors de la fabrication du fil électrode : l'épaisseur de la couche de zinc initialement déposée, et l'importance du traitement thermique réalisant la diffusion du zinc et du cuivre. L'opérateur choisit donc ces deux paramètres de façon appropriée, sans difficulté.

Les considérations et les valeurs de conductivité électrique globale ci-dessus ont été appliquées avec succès pour réaliser des fils électrodes à couche superficielle d'alliage de zinc et de cuivre dont l'épaisseur est supérieure ou égale à 10 % du diamètre, sur une âme en cuivre non allié.

Elles peuvent également être appliquées avantageusement pour réaliser des fils électrodes à structure différente, par exemple à couche superficielle plus mince, à couche superficielle en autres métaux ou alliages, à couches superficielles multiples, sur une âme en cuivre non allié ou en un autre métal ou alliage.

Les propriétés avantageuses et inattendues des fils selon l'invention ont été vérifiées au cours d'observations expérimentales. On a ainsi réalisé, sur une machine Charmilles Robofil 2020, des usinages comparatifs de pièces d'acier Z 160 CDV12 de 50 mm de hauteur à l'aide des fils ci-après, qui ont tous le même diamètre de 0,25 mm :

| Numéro | Âme | Couche, épaisseur | Conductivité (%IACS) |
|---|---|---|---|
| 1 | Cuivre non allié | Diffusée 5% | 82 |
| 2 | Cuivre non allié | Diffusée 11% | 67 |
| 3 | Cuivre non allié | Diffusée 16% | 63 |
| 4 | Cuivre au magnésium | Diffusée 11% | 61 |
| 5 | Cuivre au fer phosphore | Diffusée 11% | 45 |

On a testé à la fois la vitesse d'électroérosion et la résistance mécanique à la rupture de chaque fil en réalisant l'usinage dans des conditions de plus en plus difficiles par réduction progressive de la pression d'injection d'eau dans la zone d'usinage.

Le fil numéro 1, à couche superficielle en cuivre non allié plus mince, a permis une vitesse d'usinage de 145 mm²/min à la pression d'injection d'eau maximale, et a cassé lorsque la pression d'injection d'eau était inférieure à 3,2 bars environ.

Le fil numéro 2, selon l'invention avec une couche superficielle en cuivre non allié d'épaisseur 11 %, a permis une vitesse d'usinage supérieure de 168 mm²/min, et a cassé lorsque la pression d'injection d'eau était inférieure à 4 bars environ.

Le fil numéro 3, avec une couche superficielle en cuivre non allié d'épaisseur 16 %, a permis une vitesse d'usinage encore supérieure de 171 mm²/min, mais a cassé dès que la pression d'injection d'eau était inférieure à 8 bars environ. On peut estimer qu'une telle couche superficielle de 16 % constitue une limite supérieure qu'il vaut mieux ne pas dépasser.

Les fils numéro 4 et 5, à âme en cuivre allié, ont permis des vitesses d'usinage respectives de 165 mm²/min et 161 mm²/min, mais ont cassé dès que la pression d'injection d'eau était inférieure à 5 bars environ.

Les essais ci-dessus démontrent les propriétés avantageuses et inattendues des fils selon l'invention : de manière non évidente, les fils à âme en cuivres alliés, normalement meilleurs à haute température, ont résisté moins bien que les fils à âme en cuivre non allié lors des usinages en conditions défavorables de refroidissement.

La fabrication d'un fil électrode tel que défini ci-dessus peut comprendre les étapes de :
a. prévoir un fil d'âme en cuivre non allié de diamètre supérieur au diamètre du fil à réaliser,
b. recouvrir le fil d'âme avec du zinc pur selon une épaisseur appropriée,
c. soumettre le fil d'âme recouvert à un traitement thermique de diffusion, pour réaliser une couche d'enrobage,
d. tréfiler pour amener le fil électrode au diamètre final, la couche d'enrobage ayant alors une épaisseur supérieure à 10 % du diamètre final du fil électrode.

De préférence, lors de l'étape b, le zinc est déposé sur le fil d'âme en cuivre par dépôt électrolytique.

Après l'étape de diffusion (c) ou après l'étape de tréfilage (d), on peut en outre recouvrir le fil électrode d'une mince couche superficielle de contact, par exemple en zinc, cuivre, nickel, argent ou or. Cela peut notamment être réalisé par dépôt électrolytique.

Selon l'invention, on peut avantageusement utiliser un fil électrode ainsi défini pour un procédé d'usinage d'une pièce par électroérosion. Dans ce cas, dans une machine d'usinage à générateur électrique produisant l'énergie électrique d'étincelage, le générateur est réglé pour produire l'énergie d'étincelage maximale compatible avec la capacité d'usinage du fil électrode sans rupture, permettant ainsi d'augmenter la vitesse d'usinage.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles:
- la figure 1 est une vue schématique de face d'une machine d'électroérosion à fil ;
- la figure 2 est une vue de dessus illustrant le processus d'électroérosion sur la machine de la figure 1 ;
- la figure 3 illustre en vue de dessus la pièce usinée des figures 1 et 2 ;
- la figure 4 est une vue schématique en perspective, à grande échelle d'un fil électrode selon un mode de réalisation de la présente invention ; et
- la figure 5 est une vue schématique en coupe transversale d'un fil électrode selon un mode de réalisation préféré de l'invention.

### DESCRIPTION DES MODES DE REALISATION PREFERES

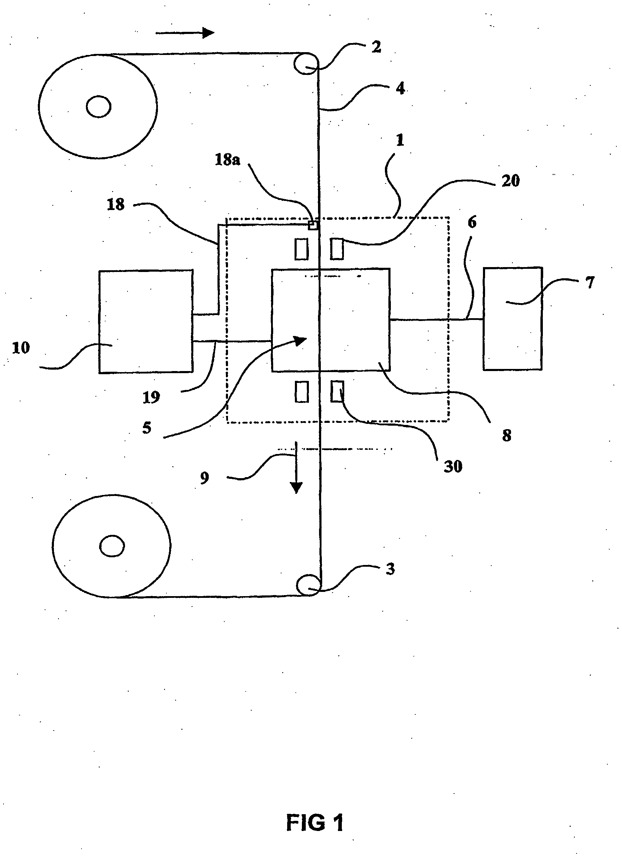

On considère tout d'abord les figures 1 à 3, qui illustrent un procédé d'usinage par étincelage érosif au moyen d'un fil électrode. La machine d'électroérosion telle qu'illustrée sur la figure 1 comprend essentiellement une enceinte 1 d'usinage contenant un diélectrique tel que de l'eau, des moyens tels que des poulies 2 et 3 et des guides fils 20 et 30 pour tenir un fil électrode 4 et le tendre dans une zone d'étincelage 5 à l'intérieur de l'enceinte 1, un support de pièce 6 et des moyens 7 pour déplacer le support de pièce 6 par rapport au fil électrode 4 dans la zone d'étincelage 5. La pièce à usiner 8, tenue par le support de pièce 6, est placée dans la zone d'étincelage 5. Les guides fils 20, 30 sont de part et d'autre de la pièce à usiner 8, et guident le fil électrode 4 avec précision. Ils ont pour cela une position proche de la pièce à usiner 8, et leur diamètre est peu supérieur à celui du fil électrode 4, par exemple un diamètre de 254 µm pour un fil électrode 4 de 250 µm. Le fil électrode 4 défile longitudinalement comme indiqué par la flèche 9 dans la zone d'étincelage 5 au regard de la pièce à usiner 8. Un générateur électrique 10, connecté électriquement d'une part au fil électrode 4 par une ligne 18 et un contact 18a qui touche le fil électrode 4 lors de son passage dans le diélectrique de l'enceinte 1 entre la poulie 2 et le guide fil 20, et d'autre part à la pièce à usiner 8 par une ligne 19, génère dans la zone d'étiricelage 5 une énergie électrique appropriée pour faire apparaître des arcs électriques entre la pièce à usiner 8 et le fil électrode 4.

La machine comprend des moyens de commande pour adapter l'énergie électrique, la vitesse de défilement du fil électrode 4, et le déplacement de la pièce à usiner 8 en fonction des étapes d'usinage.

Comme on le voit sur la figure 2, par déplacement de la pièce à usiner dans une direction transversale selon la flèche 11, l'étincelage érosif produit progressivement la pénétration du fil électrode 4 dans la masse de la pièce à usiner 8 qui est conductrice de l'électricité, et produit une fente 12. Ensuite, par déplacement de la pièce à usiner 8 dans le sens de la flèche 13, on produit une découpe perpendiculaire, pour réaliser finalement une pièce telle qu'illustrée sur la figure 3, avec une première facette 14 et une seconde facette 15 usinées.

On comprend qu'une énergie électrique élevée générée par le générateur électrique 10 permet un étincelage rapide et permet donc un déplacement plus rapide de la pièce à usiner par rapport au fil électrode 4, pour un usinage rapide. En effet, le déplacement de la pièce doit suivre l'érosion produite par les étincelles, sans excès. Une vitesse trop lente réduit la vitesse d'usinage. Une vitesse trop rapide produit le contact du fil et de la pièce, et l'arrêt de la machine par suite du court-circuit.

Mais l'énergie électrique produit un échauffement du fil dans la zone d'usinage, et l'augmentation de cette énergie augmente simultanément les risques de rupture du fil. Ainsi, pour une structure donnée du fil électrode, la vitesse d'usinage maximale est obtenue pour l'énergie électrique juste inférieure à l'énergie provoquant la rupture du fil électrode.

Considérons maintenant à nouveau les essais qui ont permis la conception de la présente invention.

Des essais d'usinage par électroérosion ont été effectués sur une machine de marque Charmilles Robofil 2020, en régime de découpe E3, avec une pièce d'acier de 50 mm de hauteur.

Un premier essai comparatif a été fait d'une part avec un fil électrode en laiton à 37 % de zinc, d'autre part avec un fil électrode dont l'âme en laiton à 37 % de zinc est recouverte d'une couche de 8 microns d'alliage de cuivre et de zinc en phases α et β obtenu par un traitement thermique de diffusion. Les deux fils électrodes avaient le même diamètre final de 0,25 mm. En vitesse d'usinage relative, le fil électrode de laiton a permis une vitesse d'usinage de 98, tandis que le fil électrode à âme en laiton recouverte d'alliage de zinc et de cuivre diffusé n'a permis une vitesse que de 67.

Un second essai comparatif a été réalisé en utilisant d'une part un fil électrode dont l'âme est un alliage de cuivre et de zinc à 80 % de cuivre, avec une couche d'enrobage de 20 microns d'alliage de cuivre et de zinc diffusé en phases α et β, et d'autre part avec un fil électrode dont l'âme est en cuivre non allié recouverte d'une couche de 14 microns d'alliage de cuivre et de zinc diffusé. Les deux fils électrodes ont permis un usinage selon les vitesses relatives de 109 et 125 respectivement. Cela montre l'avantage d'une âme en cuivre non allié, qui usine plus vite que l'âme en laiton même si la couche d'enrobage est plus fine.

Un troisième essai a utilisé successivement trois fils électrodes ayant une âme en cuivre non allié, avec des couches d'enrobage en alliage de cuivre et de zinc diffusé respectivement de 11 microns, 14 microns et 28 microns, pour un diamètre de fil de 0,25 mm. Les vitesses relatives qui ont été obtenues sont respectivement de 115, 125 et 133. On constate qu'à puissance d'étincelage ideritique, une plus grande épaisseur de la couche diffusée accélère la découpe, dans les cas des fils électrodes à âme en cuivre non allié.

Mettant à profit ces résultats, l'invention permet d'obtenir une meilleure vitesse d'usinage en utilisant un fil électrode particulier, tel qu'illustré sur la figure 4 à plus grande échelle. Le fil électrode selon l'invention comprend une âme 16 en cuivre non allié, revêtue d'une couche d'enrobage 17 en alliage de cuivre et de zinc diffusé dont l'épaisseur E est supérieure à 10 % du diamètre D du fil électrode.

On peut avoir intérêt à augmenter fortement l'épaisseur E de la couche d'enrobage. Toutefois, on trouve une limite dans les capacités de déformation relative des métaux lors du tréfilage permettant de mettre à dimension le fil électrode : une épaisseur trop importante de couche d'enrobage risque de conduire à une rupture du fil lors du tréfilage, ce qui affecte les propriétés de production et d'utilisation du fil électrode. Le tréfilage reste aisément réalisable lorsque l'épaisseur relative de la couche d'enrobage est inférieure à environ 16 % du diamètre final D. Simultanément, une trop forte épaisseur E de la couche d'enrobage fragilise le fil à cause d'une conductivité électrique insuffisante.

L'interface entre l'âme et la couche d'enrobage est en général déformée par l'opération de tréfilage, ce qui lui enlève naturellement le caractère lisse et lui confère une légère irrégularité. Cette irrégularité n'est pas gênante pour le processus d'électroérosion.

On peut avantageusement ajouter sur le fil électrode une couche superficielle 21 de contact, par exemple en zinc, cuivre, nickel, argent ou or, améliorant la conduction électrique entre le fil électrode 4 et le contact 18a, et améliorant la stabilité de l'étincelage.

Une couche de cuivre épaisse abaisse sensiblement la vitesse d'électroérosion. Pour éviter cet inconvénient, la couche de cuivre doit être extrêmement fine, par exemple de moins de 0,5 micron.

Une couche de nickel semble trop fragile pour être continue à de faibles épaisseurs de l'ordre de 1 micron.

Une couche de zinc de 1 micron environ est favorable. Cette couche, même discontinue, améliore de manière inattendue la touche électrique et la stabilité de l'étincelage.

La surface du fil électrode peut être recouverte d'une mince couche d'oxyde, résultant des étapes de fabrication. Il n'est pas indispensable de supprimer cette couche, bien que cela soit possible. Cette couche peut être uniforme ou non.

La surface du fil électrode peut être fissurée, sans que cela réduise la vitesse d'usinage.

Le fil électrode obtenu selon l'invention est généralement de couleur jaune-brun.

La surface du fil électrode doit être relativement propre, avec peu de traces de lubrifiants de tréfilage ou autres salissures.

Pour un fil électrode défini ci-dessus, de meilleures propriétés d'électroérosion sont encore obtenues lorsque la couche d'enrobage est en alliage de cuivre et de zinc à mélange hétérogène des phases a et β et/ou β'. La teneur en zinc est alors comprise entre 35 % et 57 %, de préférence comprise entre 35 % et 50 % en poids. Sur des fils électrodes testés, et donnant satisfaction, on a relevé des teneurs en zinc de 45,7 %, 41,5 % et 35,4 %, et une teneur en oxygène de 0,5 % sous forme d'oxydes de zinc ou de cuivre. Les phases présentes dans la couche superficielle étaient les phases α et β et β' du diagramme cuivre-zinc.

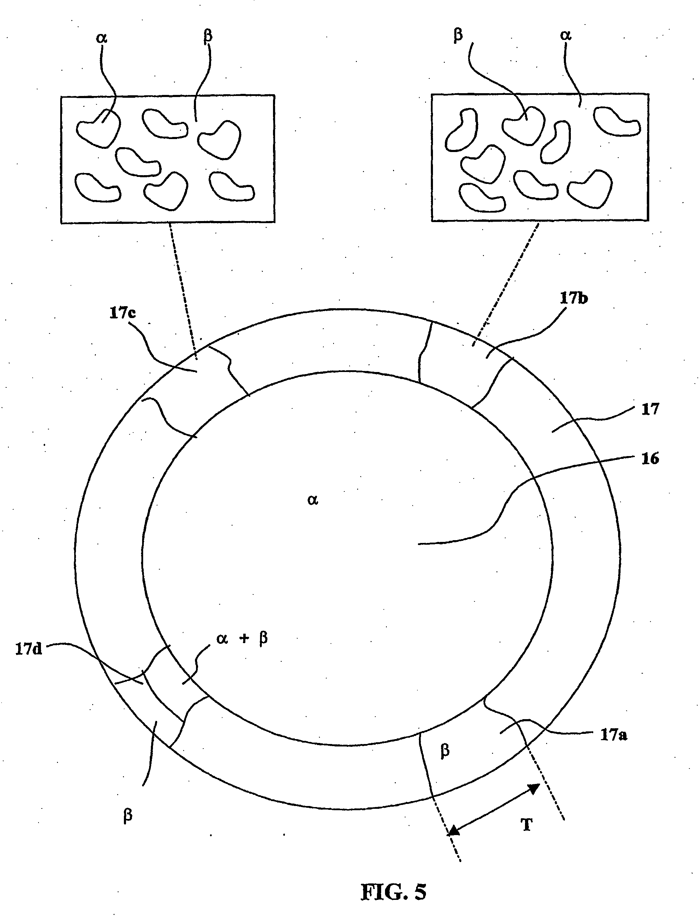

La figure 5 illustre schématiquement en coupe transversale la structure de la couche superficielle d'un fil selon un mode de réalisation préféré de l'invention. La structure est hétérogène, en ce sens que certaines portions de la couche superficielle sont cristallisées en phase β ou β', depuis l'âme jusqu'à la surface externe, tandis que d'autres zones sont un mélange d'une phase dans une matrice d'une autre phase.

On distingue ainsi, sur la figure, l'âme 16 en cuivre non allié, et l'enrobage 17 en alliage de cuivre et de zinc dont l'épaisseur est supérieure à 10 % du diamètre. La zone 17a est un gros cristal en phase β, pouvant avoir une taille T de quelques microns à plus d'une dizaine de microns. La zone 17b est une zone de mélange des phases a et β, par exemple, comme illustré à plus grande échelle dans l'encadré en haut à droite de la figure, des micro zones en phase β, de 1 à quelques microns par exemple, réparties dans une matrice en phase α. Inversement, dans la zone 17c, on trouve des micro zones en phase α réparties dans une matrice en phase β. La zone 17d est une combinaison d'une couche superficielle en phase β et d'une couche inférieure en mélange des phases α et β.

Une telle structure hétérogène est obtenue par un choix approprié des conditions de diffusion thermique lors de la réalisation de la couche d'enrobage : échauffement rapide, durée appropriée de diffusion.

On maintient l'échauffement pendant la durée juste suffisante à l'obtention du mélange de phases désiré.

L'intérêt de cette structure est notamment de faciliter le tréfilage, malgré la présence a priori défavorable de la phase β, de sorte qu'il est alors possible d'augmenter la teneur en zinc et d'augmenter en conséquence la vitesse d'électroérosion.

Un fil électrode selon l'invention peut être réalisé selon un procédé comprenant les étapes :
a. prévoir un fil d'âme en cuivre non allié de diamètre D1 supérieur au diamètre D du fil à réaliser,
b. recouvrir le fil d'âme avec du zinc pur selon une épaisseur appropriée permettant ensuite de réaliser l'épaisseur finale ;
c. soumettre le fil d'âme recouvert à un traitement thermique de diffusion, réalisant une couche d'enrobage 17 ;
d. tréfiler pour amener le fil électrode au diamètre final D, la couche d'enrobage 17 ayant alors une épaisseur E supérieure à 10 % du diamètre final D du fil électrode.

La présente invention n'est pas limitée aux modes de réalisation qui ont été explicitement décrits, mais elle en inclut les diverses variantes et généralisations contenues dans le domaine des revendications ci-après.

## Revendications

1. Fil électrode pour usinage par étincelage érosif, comprenant une âme (16) métallique revêtue d'une couche d'enrobage (17) en alliage de zinc diffusé, **caractérisé en ce que** :
- l'âme (16) est en cuivre non allié,
- la couche d'enrobage (17) est en alliage de zinc et de cuivre diffusé,
- l'épaisseur (E) de la couche d'enrobage (17) en alliage de cuivre et de zinc est supérieure à 10 % du diamètre (D) du fil électrode.

2. Fil électrode selon la revendication 1, **caractérisé en ce que** l'épaisseur (E) de la couche d'enrobage (17) est inférieure ou égale à 16 % du diamètre (D) du fil électrode.

3. Fil électrode selon l'une des revendications 1 ou 2, **caractérisé en ce que** la conductivité électrique globale du fil électrode est comprise entre 65 % IACS et 75 % IACS.

4. Fil électrode selon l'une des revendications 1 ou 2, **caractérisé en ce que** la conductivité électrique globale du fil électrode est voisine de 69 % IACS.

5. Fil électrode selon l'une quelconque des revendications 1 à 4, **caractérisé en ce que** le cuivre non allié constituant l'âme (16) est choisi parmi la famille des cuivres recommandés : Cu-a1 (Cu-ETP) ; Cu-a2 (Cu-FRHC) ; Cu-C1 (Cu-OF) ; Cu-c2 (Cu-OFE).

6. Fil électrode selon l'une quelconque des revendications 1 à 5, **caractérisé en ce que** :
- pour un diamètre (D) de fil électrode de 0,20 mm, l'épaisseur (E) de la couche d'enrobage est supérieure ou égale à 20 microns,
- pour un diamètre (D) de fil électrode de 0,25 mm, l'épaisseur (E) de la couche d'enrobage est supérieure ou égale à 25 microns,
- pour un diamètre (D) de fil électrode de 0,30 mm, l'épaisseur (E) de la couche d'enrobage est supérieure ou égale à 30 microns,
- pour un diamètre (D) de fil électrode de 0,33 mm, l'épaisseur (E) de la couche d'enrobage est supérieure ou égale à 33 microns,
- pour un diamètre (D) de fil électrode de 0,35 mm, l'épaisseur (E) de la couche d'enrobage est supérieure ou égale à 35 microns.

7. Fil électrode selon l'une quelconque des revendications 1 à 6, **caractérisé en ce que** la couche d'enrobage (17) est en alliage de cuivre et de zinc à mélange des phases α et β et/ou β', la teneur en zinc étant alors comprise entre 35 % et 57 %, de préférence comprise entre 35 % et 50 % en poids.

8. Fil électrode selon la revendication 7, **caractérisé en ce que** la couche d'enrobage est un mélange hétérogène des phases α et β et/ou β'.

9. Fil électrode selon l'une quelconque des revendications 1 à 8, **caractérisé en ce que** la couche d'enrobage (17) est revêtue d'une mince couche superficielle (21) de contact en zinc, en cuivre, en nickel, en argent ou en or.

10. Procédé de réalisation d'un fil électrode pour étincelage érosif selon l'une quelconque des revendications 1 à 9, **caractérisé en ce qu'**il comprend les étapes :
a. prévoir un fil d'âme en cuivre non allié de diamètre (D1) supérieur au diamètre (D) du fil à réaliser,
b. recouvrir le fil d'âme avec du zinc pur selon une épaisseur appropriée,
c. soumettre le fil d'âme recouvert à un traitement thermique de diffusion pour réaliser une couche d'enrobage (17),
d. tréfiler pour amener le fil électrode au diamètre final (D), la couche d'enrobage (17) ayant alors une épaisseur (E) supérieure à 10 % du diamètre final (D) du fil électrode.

11. Procédé selon la revendication 10, **caractérisé en ce que**, lors de l'étape b, le zinc est déposé sur le fil d'âme en cuivre par dépôt électrolytique.

12. Procédé selon l'une des revendications 10 ou 11, **caractérisé en ce que** le traitement thermique de diffusion est réalisé par échauffement rapide et durée appropriée pour obtenir un mélange hétérogène des phases α et β et/ou β'.

13. Procédé selon l'une quelconque des revendications 10 à 12, **caractérisé en ce qu'**on recouvre le fil électrode d'une mince couche superficielle (21) de contact en zinc, cuivre, nickel, argent ou or, après l'étape de diffusion (c) ou après l'étape de tréfilage (d).

14. Utilisation d'un fil électrode selon l'une quelconque des revendications 1 à 9 pour un procédé d'usinage d'une pièce par électroérosion dans une machine d'usinage à générateur électrique produisant l'énergie électrique d'étincelage, **caractérisée en ce que** le générateur est réglé pour produire l'énergie d'étincelage maximale compatible avec la capacité d'usinage du fil électrode sans rupture, permettant ainsi d'augmenter la vitesse d'usinage.

## Patentansprüche

1. Drahtelektrode für Bearbeitung mittels Funkenerosion, die eine metallische Seele (16) aufweist, die mit einer Umhüllungsschicht (17) aus einer diffundierten Zinklegierung überzogen ist, **dadurch gekennzeichnet, daß**:
- die Seele (16) aus nichtlegiertem Kupfer besteht,
- die Umhüllungsschicht (17) aus einer Legierung aus Zink und diffundiertem Kupfer ist,
- die Dicke (E) der Umhüllungsschicht (17) aus der Legierung aus Kupfer und Zink größer als 10 % des Durchmessers (D) der Drahtelektrode ist.

2. Drahtelektrode nach Anspruch 1, **dadurch gekennzeichnet, daß** die Dicke (E) der Umhüllungsschicht (17) kleiner oder gleich 16 % des Durchmessers (D) der Drahtelektrode ist.

3. Drahtelektrode nach einem der Ansprüche 1 oder 2,
**dadurch gekennzeichnet,**
**daß** die globale elektrische Leitfähigkeit der Drahtelektrode zwischen 65 % IACS und 75 % IACS liegt.

4. Drahtelektrode nach einem der Ansprüche 1 oder 2,
**dadurch gekennzeichnet,**
**daß** die globale elektrische Leitfähigkeit der Drahtelektrode nahe 69 % IACS liegt.

5. Drahtelektrode nach irgendeinem der Ansprüche 1 bis 4, **dadurch gekennzeichnet,**
**daß** das nichtlegierte Kupfer, das die Seele (16) bildet, aus der Familie der empfohlenen Kupfer gewählt ist: Cu-al (Cu-ETP); Cu-a2 (Cu-FRHC); Cu-Cl (Cu-OF); Cu-c2 (Cu-OFE).

6. Drahtelektrode nach irgendeinem der Ansprüche 1 bis 5, **dadurch gekennzeichnet, daß**:
- für einen Durchmesser (D) der Drahtelektrode von 0,20 mm die Dicke (E) der Umhüllungsschicht größer oder gleich 20 Mikron ist,
- für einen Durchmesser (D) der Drahtelektrode von 0,25 mm die Dicke (E) der Umhüllungsschicht größer oder gleich 25 Mikron ist,
- für einen Durchmesser (D) der Drahtelektrode von 0,30 mm die Dicke (E) der Umhüllungsschicht größer oder gleich 30 Mikron ist,
- für einen Durchmesser (D) der Drahtelektrode von 0,33 mm die Dicke (E) der Umhüllungsschicht größer oder gleich 33 Mikron ist,
- für einen Durchmesser (D) der Drahtelektrode von 0,35 mm die Dicke (E) der Umhüllungsschicht größer oder gleich 35 Mikron ist.

7. Drahtelektrode nach irgendeinem der Ansprüche 1 bis 6, **dadurch gekennzeichnet,**
**daß** die Umhüllungsschicht (17) aus einer Legierung von Kupfer und Zink mit einer Mischung der Phasen α und β und/oder β' besteht, wobei der Gehalt an Zink zwischen 35 % und 57 % und vorzugsweise zwischen 35 und 50 Gewichts% liegt.

8. Drahtelektrode nach Anspruch 7, **dadurch gekennzeichnet, daß** die Umhüllungsschicht eine heterogene Mischung der Phasen α und β und/oder β' ist.

9. Drahtelektrode nach irgendeinem der Ansprüche 1 bis 8, **dadurch gekennzeichnet,**
**daß** die Umhüllungsschicht (17) mit einer dünnen Kontaktabdeckschicht (21) aus Zink, Kupfer, Nickel, Silber oder Gold beschichtet ist.

10. Verfahren zur Herstellung einer Drahtelektrode für Elektroerosion nach irgendeinem der Ansprüche 1 bis 9, **dadurch gekennzeichnet,**
**daß** es folgende Schritte enthält:
a. Bereitstellen einer Drahtseele aus nichtlegiertem Kupfer mit einem Durchmesser (D1) größer als dem Durchmesser (D) des herzustellenden Drahtes,
b. Beschichten der Drahtseele mit reinem Zink mit einer geeigneten Dicke,
c. Unterwerfen der beschichteten Drahtseele einer thermischen Behandlung zur Diffusion, um eine Umhüllungsschicht (17) herzustellen,
d. Drahtziehen, um die Drahtelektrode auf den endgültigen Durchmesser (D) zu bringen, wobei die Umhüllungsschicht (17) bereits eine Dicke (E) aufweist, die größer als 10 % des endgültigen Durchmessers (D) der Drahtelektrode ist.

11. Verfahren nach Anspruch 10, **dadurch gekennzeichnet, daß** während Schritt b. das Zink auf die Drahtseele aus Kupfer mittels elektrolytischem Abscheiden aufgebracht wird.

12. Verfahren nach einem der Ansprüche 10 oder 11, **dadurch gekennzeichnet,**
**daß** die thermische Behandlung zur Diffusion durch eine schnelle Erwärmung und mit geeigneter Dauer realisiert ist, um eine heterogene Mischung der Phasen α und β und/oder β' zu erhalten.

13. Verfahren nach irgendeinem der Ansprüche 10 bis 12,
**dadurch gekennzeichnet,**
**daß** die Drahtelektrode mit einer dünnen Kontaktabdeckschicht (21) aus Zink, Kupfer, Nickel, Silber oder Gold nach dem Schritt der Diffusion (c) oder nach dem Schritt des Drahtziehens (d) bedeckt wird.

14. Verwendung einer Drahtelektrode nach irgendeinem der Ansprüche 1 bis 9 für ein Verfahren zur Bearbeitung eines Werkstückes mittels Elektroerosion mit einer Bearbeitungsmaschine mit einem elektrischen Generator, der elektrische Funkenenergie erzeugt, **dadurch gekennzeichnet,**
**daß** der Generator geregelt ist, um maximale Funkenenergie zu erzeugen, die mit der Bearbeitungskapazität der Drahtelektrode ohne Bruch möglich ist, was es erlaubt, die Bearbeitungsgeschwindigkeit zu vergrößern.

## Claims

1. A spark erosion machining electrode wire comprising a metal core (16) coated with a coating layer (17) of diffused zinc alloy, **characterized in that** :
- the core (16) is of unalloyed copper,
- the coating layer (17) is of diffused copper and zinc alloy,
- the thickness (E) of the coating layer (17) of copper and zinc alloy is greater than 10% of the diameter (D) of the electrode wire.

2. Electrode wire according to claim 1, **characterized in that** the thickness (E) of the coating layer (17) is less than or equal to 16% of the diameter (D) of the electrode wire.

3. Electrode wire according to claim 1 or claim 2, **characterized in that** the overall electrical conductivity of the electrode wire is from 65% IACS to 75% IACS.

4. Electrode wire according to claim 1 or claim 2, **characterized in that** the overall electrical conductivity of the electrode wire is close to 69% IACS.

5. Electrode wire according to any one of claims 1 to 4, **characterized in that** the unalloyed copper constituting the core (16) is chosen from the family of recommended coppers : Cu-a1 (Cu-ETP) ; Cu-a2 (Cu-FRHC) ; Cu-C1 (Cu-OF) ; Cu-c2 (Cu-OFE).

6. Electrode wire according to any one of claims 1 to 5, **characterized in that** :
- for an electrode wire diameter (D) of 0.20 mm, the thickness (E) of the coating layer is greater than or equal to 20 microns,
- for an electrode wire diameter (D) of 0.25 mm, the thickness (E) of the coating layer is greater than or equal to 25 microns,
- for an electrode wire diameter (D) of 0.30 mm, the thickness (E) of the coating layer is greater than or equal to 30 microns,
- for an electrode wire diameter (D) of 0.33 mm, the thickness (E) of the coating layer is greater than or equal to 33 microns,
- for an electrode wire diameter (D) of 0.35 mm, the thickness (E) of the coating layer is greater than or equal to 35 microns.

7. Electrode wire according to any one of claims 1 to 6, **characterized in that** the coating layer (17) is of copper and zinc alloy with a mixture of α and β and/or β' phases, the zinc content by weight being from 35% to 57%, and preferably from 35% to 50%.

8. Electrode wire according to claim 7, **characterized in that** the coating layer is a heterogeneous mixture of α and β and/or β' phases.

9. Electrode wire according to any one of claims 1 to 8, **characterized in that** the coating layer (17) is coated with a thin contact surface layer (21) of zinc, copper, nickel, silver or gold.

10. A method of producing a spark erosion electrode wire according to any one of claims 1 to 9, **characterized in that** it comprises the following steps :
a. providing an unalloyed copper core wire of diameter (D1) greater than the diameter (D) of the wire to be produced,
b. coating the core wire with pure zinc to an appropriate thickness,
c. subjecting the coated core wire to diffusion heat treatment to form a coating layer (17),
d. drawing the electrode wire to the final diameter (D), the coating layer (17) then having a thickness (E) greater than 10% of the final diameter (D) of the electrode wire.

11. Method according to claim 10, **characterized in that**, in step b, the zinc is deposited on the copper core wire electrolytically.

12. Method according to claim 10 or claim 11, **characterized in that** the diffusion heat treatment is carried out by rapid heating of appropriate duration to obtain a heterogeneous mixture of α and β and/or β' phases.

13. Method according to any one of claims 10 to 12, **characterized in that** the electrode wire is covered with a thin contact surface layer (21) of zinc, copper, nickel, silver or gold, after the diffusion step (c) or after the drawing step (d).

14. Use of an electrode wire according to any one of claims 1 to 9 for machining a part by spark erosion in a machine employing an electrical generator to produce the sparking electrical energy, **characterized in that** the generator is set to produce the maximum sparking energy compatible with the machining capacity of the electrode wire without breaking, thereby increasing the machining rate.
